# EUROPEAN PATENT APPLICATION

(11) **EP 3 038 021 A1**
(43) Date of publication of application: **29.06.2016**
(21) Application number: 15200074.1
(22) Date of filing: 15.12.2015
(51) Int. Cl.: G06Q 10/00, G08G 1/16

(54) **RISK DETERMINATION METHOD, RISK DETERMINATION DEVICE, RISK DETERMINATION SYSTEM, AND RISK OUTPUT DEVICE**

(30) Priority: 26.12.2014 JP 2014266431; 14.09.2015 JP 2015181078
(71) Applicant: Panasonic Intellectual Property Corporation of America, Torrance, CA 90503 (US)
(72) Inventor: WAKABAYASHI, Tohru, Osaka-shi, Osaka 540-6207 (JP); NAKANO, Toshihisa, Osaka-shi, Osaka 540-6207 (JP); MINAMI, Kimio, Osaka-shi, Osaka 540-6207 (JP); AMANO, Hiroshi, Osaka-shi, Osaka 540-6207 (JP); HIROSE, Takako, Osaka-shi, Osaka 540-6207 (JP)
(74) Representative: Grünecker Patent- und Rechtsanwälte PartG mbB

(57) **Abstract**

In a risk determination method: moving body information, in which accompanying information that indicates the current position of a moving body and a current-position image that indicates a situation around the moving body at the current position are included in correspondence to each other, is obtained; and, if risk occurrence information corresponding to the current position indicated in the accompanying information included in the moving body information is not stored in a risk occurrence information manager and risk occurrence information corresponding to a position other than the current position is stored in the risk occurrence information manager, a degree of risk at the current position is determined on the basis of a similarity between the current-position image included in the moving body information and a risky-position image included in at least one piece of risk occurrence information stored in the risk occurrence information manager.

## Description

### BACKGROUND

### 1. Technical Field

The present disclosure relates to a risk determination method, a risk determination device, a risk determination system, and a risk output device.

### 2. Description of the Related Art

In a known risk determination system, while a user is travelling with a moving body (such as, for example, a vehicle), the user is informed or warned in advance of a position at which an accident, a near accident, or the like is highly likely to occur to prevent a risky incident. This type of risk determination system identifies a position at which a risky incident is highly likely to occur (that is, a highly risky position) on the basis of the detection results of the position, behavior, driving operation, and the like of the moving body, and stores the identified position in correspondence to map data.

In a risk determination system described in Japanese Unexamined Patent Application Publication No. 2014-154004, for example, an image around a moving body is obtained by photography with a camera mounted on the moving body, and positional information about the images is obtained with a positional sensor attached to the moving body. Images and positional information obtained in this way are analyzed and risky incidents are stored in a database for each registered position. When the moving body of the user passes through a registered position, a degree of risk at the registered position is determined on the basis of the risky incident, registered in the database, at the registered position and the user is informed or warned of a risk.

### SUMMARY

In one general aspect, the techniques disclosed here feature a risk determination method used in a risk determination system that manages a degree of risk at a position at which a moving body is positioned. The risk determination system includes a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other. The risk determination method includes a step of obtaining moving body information, in which current position information that indicates the current position of the moving body and second sensor information that indicates a situation around the moving body at the current position are included in correspondence to each other, and also includes a step of determining, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on the basis of a similarity between the second sensor information included in the moving body information and the first sensor information included in the at least one piece of risk occurrence information stored in the risk occurrence information manager.

In the risk determination method according to one aspect of the present disclosure, a degree of risk can be precisely determined.

It should be noted that these comprehensive or specific aspects may be implemented as a system, a method, an integrated circuit, a computer program, a recording medium such as a computer-readable compact disc-read-only memory (CD-ROM), or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram illustrating the structure of a risk determination system according to a first embodiment;
Fig. 2 is a block diagram illustrating the structure of a server device according to the first embodiment;
Figs. 3A and 3B illustrate an example of moving body information according to the first embodiment;
Figs. 4A and 4B illustrate an example of risk occurrence information according to the first embodiment;
Fig. 5 is a block diagram illustrating the structure of a moving-body-mounted device according to the first embodiment;
Fig. 6 is a sequence diagram illustrating a flow of operations performed by the risk determination system according to the first embodiment;
Figs. 7A, 7B, and 7C illustrate examples of services in which the risk determination system according to the first embodiment is applied;
Fig. 8 is a block diagram illustrating the structure of a risk determination system according to a second embodiment;
Fig. 9 is a block diagram illustrating the structure of a server device according to the second embodiment;
Fig. 10 illustrates an example of risk determination information according to the second embodiment; and
Fig. 11 is a sequence diagram illustrating a flow of operations performed by the risk determination system according to the second embodiment.

### DETAILED DESCRIPTION

### Underlying Knowledge Forming Basis of the Present Disclosure

In the risk determination system described in Japanese Unexamined Patent Application Publication No. 2014-154004, however, when the moving body of the user passes through a position that is not stored in the database, a degree of risk at that position cannot be determined. Therefore, it is not possible to inform or warn the user of a risk.

One non-limiting and exemplary embodiment provides a risk determination method, a risk determination device, and a risk determination system that can precisely determine a degree of risk, and also provides a risk output device.

The risk determination method according to one aspect of the present disclosure is a risk determination method used in a risk determination system that manages a degree of risk at a position at which a moving body is positioned. The risk determination system includes a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other. The risk determination method includes a step of obtaining moving body information, in which current position information that indicates the current position of the moving body and second sensor information that indicates a situation around the moving body at the current position are included in correspondence to each other, and also includes a step of determining, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on the basis of a similarity between the second sensor information included in the moving body information and the first sensor information included in the at least one piece of risk occurrence information stored in the risk occurrence information manager.

According to this aspect, even if the risk occurrence information corresponding to the current position indicated in the current position information included in the moving body information is not stored in the risk occurrence information manager, a degree of risk is determined on the basis of a similarity between the second sensor information included in the moving body information and the first sensor information included in the risk occurrence information corresponding to a position other than the current position. Thus, even if the moving body passes through a position other than a risky position corresponding to risk occurrence information stored in the risk occurrence information manager, a degree of risk can be precisely determined and the user of the moving body, for example, can be, for example, informed or warned of a risk.

For example, in the step of determining, if the risk occurrence information corresponding to the current position indicated in the current position information included in the moving body information and the risk occurrence information corresponding to a position other than the current position are both stored in the risk occurrence information manager, the degree of risk corresponding to the current position may be determined on the basis of a similarity between the second sensor information included in the moving body information and the first sensor information included in the risk occurrence information corresponding to the position other than the current position.

According to this aspect, if the risk occurrence information corresponding to the current position and the risk occurrence information corresponding to a position other than the current position are both stored in the risk occurrence information manager and a similarity between the second sensor information and the first sensor information included in the risk occurrence information corresponding to the position other than the current position is, for example, highest, a degree of risk is determined by use of the risk occurrence information corresponding to the position other than the current position. Accordingly, a degree of risk can be more precisely determined.

For example, the risk occurrence information may further include the seriousness of the risky incident in correspondence to the risky-position information and first sensor information. In the step of determining, a similarity may be determined between the second sensor information included in the moving body information and the first sensor information included in the at least one piece of risk occurrence information stored in the risk occurrence information manager, and the degree of risk at the current position may be determined on the basis of the similarity and the seriousness included in correspondence to the first sensor information.

According to this aspect, a degree of risk is determined on the basis of a similarity and seriousness included in correspondence to the first information, so the degree of risk can be more precisely determined.

For example, the first senor information may be a first image obtained by photographing a situation in which the risky incident occurred at the risky position, the second sensor information may be a second image obtained by photographing a situation around the moving body at the current position, and in the step of determining, the degree of risk at the current position may be determined on the basis of a similarity between the first image and the second image.

According to this aspect, if the similarity between the first image and the second image is high, it can be inferred that a similarity between the situation in which the risky incident occurred and the situation around the moving body at the current position is high. Therefore, when a degree of risk is determined on the basis of a similarity between the first image and the second image, the degree of risk can be precisely determined.

For example, the risk determination method may further include a step of analyzing, on the basis of the first image, a first traffic situation at the risky position in case of the occurrence of the risky incident and analyzing, on the basis of the second image, a second traffic situation at the current position. In the step of determining, the degree of risk at the current position may be determined on the basis of a similarity between the analyzed first traffic situation and the analyzed second traffic situation.

According to this aspect, if the similarity between the first traffic situation and the second traffic situation is high, it can be inferred that a risky incident is highly likely to occur at the current position is high. Therefore, when a degree of risk is determined on the basis of a similarity between the first traffic situation and the second traffic situation, the degree of risk can be precisely determined.

For example, the risk determination method may further include a step of creating, if the determined degree of risk at the current position is within a predetermined range, the risk occurrence information, in which the current position information included in the moving body information is taken as the risky-position information and the second sensor information included in the moving body information is taken as the first sensor information, and a step of adding the created the risk occurrence information to the risk occurrence information manager.

According to this aspect, if the degree of risk is within a predetermined range, the moving body information is added to the risk occurrence information manger as the risk occurrence information, so it is possible to increase the amount of risk occurrence information accumulated in the risk occurrence information manager.

For example, in the step of obtaining, the moving body information transmitted from a moving-body-mounted device mounted in the moving body may be received through a network; the risk determination method may further include a step of transmitting, if the determined degree of risk at the current position is within a predetermined range, degree-of-risk information about the degree of risk to the moving-body-mounted device that has transmitted the moving body information.

According to this aspect, if the degree of risk is within a predetermined range, degree-of-risk information is transmitted to the moving-body-mounted device that has transmitted the moving body information, the user of the moving body that is passing through the current position can be, for example, informed or warned of a risk.

For example, in the step of obtaining, the moving body information transmitted from a moving-body-mounted device mounted in the moving body may be received through a network; the risk determination method may further include a step of transmitting, if the determined degree of risk at the current position is within a predetermined range and another moving body is decided to pass the current position indicated in the current position information included in the moving body information within a predetermined time after the moving body information has been received, degree-of-risk information about the degree of risk to a moving-body-mounted device mounted in the other moving body.

According to this aspect, if the degree of risk is within a predetermined range, degree-of-risk information is transmitted to another moving body other than the moving body that has transmitted moving body information, so the user of the following moving body, for example, can be, informed or warned of a risk.

For example, the risk determination method may further include a step of storing risk determination information, in which the current position information and the determined degree of risk at the current position are associated with each other, in a risk determination information manager; in the step of determining, if the risk determination information corresponding to the current position indicated in the current position information included in the moving body information is stored in the risk determination information manager, the degree of risk included in the risk determination information may be used.

According to this aspect, if the risk determination information corresponding to the current position is stored in the risk determination information manager, the degree of risk included in the risk determination information is used, so processing to determine a degree of risk can be performed in a comparatively short time.

For example, the moving body information may further include third sensor information, which indicates a traveling situation of the moving body, in correspondence to the current position information and second sensor information; in the step of determining, a similarity may be obtained between the second sensor information included in the moving body information and the first sensor information included in at least one piece of risk occurrence information stored in the risk determination information manager, and the degree of risk at the current position may be determined on the basis of the similarity and third sensor information.

According to this aspect, the degree of risk is determined on the basis of the similarity and third sensor information, the degree of risk can be more precisely determined.

For example, the risk determination system further includes a risk determination device including a processor, and any one of the step of obtaining the moving body information and the step of determining the degree of risk may be executed by the processor.

The risk determination device according to one aspect of the present disclosure is a risk determination device that manages a degree of risk at a position at which a moving body is positioned. The risk determination device includes: a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other; a receiver that receives moving body information, in which current position information that indicates the current position of the moving body and second sensor information that indicates a situation around the moving body at the current position are included in correspondence to each other; and a determiner that determines, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on the basis of a similarity between the second sensor information included in the moving body information and the first sensor information included in the at least one piece of risk occurrence information stored in the risk occurrence information manager.

According to this aspect, even if the risk occurrence information corresponding to the current position indicated in the current position information included in the moving body information is not stored in the risk occurrence information manager, a degree of risk is determined on the basis of a similarity between the second sensor information included in the moving body information and the first sensor information included in the risk occurrence information corresponding to a position other than the current position. Thus, even if the moving body passes through a position other than a risky position corresponding to risk occurrence information stored in the risk occurrence information manager, a degree of risk can be precisely determined and the user of the moving body, for example, can be, for example, informed or warned of a risk.

The risk determination system according to one aspect of the present disclosure is a risk determination system, equipped with a risk determination device and a risk output device mounted in a moving body, manages a risk at a position at which the moving body is positioned. The risk determination device includes: a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other; a first receiver that receives moving body information, in which current position information that indicates the current position of the moving body and second sensor information that indicates a situation around the moving body at the current position are included in correspondence to each other; a determiner that determines, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on the basis of a similarity between the second sensor information included in the moving body information and the first sensor information included in the at least one piece of risk occurrence information stored in the risk occurrence information manager; and a first transmitter that transmits degree-of-risk information about the degree of risk to the risk output device. The risk output device includes a second transmitter that transmits the moving body information to the risk determination device, a second receiver that receives the degree-of-risk information transmitted from the risk determination device, and an outputer that outputs, on the basis of the received degree-of-risk information, attention calling information to call attention to the user of the moving body.

According to this aspect, even if the risk occurrence information corresponding to the current position indicated in the current position information included in the moving body information is not stored in the risk occurrence information manager, a degree of risk is determined on the basis of a similarity between the second sensor information included in the moving body information and the first sensor information included in the risk occurrence information corresponding to a position other than the current position. Thus, even if the moving body passes through a position other than a risky position corresponding to risk occurrence information stored in the risk occurrence information manager, a degree of risk can be precisely determined and the user of the moving body, for example, can be, for example, informed or warned of a risk.

The risk output device according to one aspect of the present disclosure is a risk output device used in the risk determination system described above. The risk output device includes: a second transmitter that transmits, to a risk determination device, moving body information, in which current position information that indicates the current position of a moving body and second sensor information that indicates a situation around the moving body at the current position are included in correspondence to each other; and a second receiver that receives degree-of-risk information transmitted from the risk determination device; and an outputer that outputs, on the basis of the received degree-of-risk information, attention calling information to call attention to the user of the moving body.

It should be noted that these comprehensive or specific aspects may be implemented as a system, a method, an integrated circuit, a computer program, a storage medium such as a computer-readable compact disc-read-only memory (CD-ROM), or any selective combination thereof.

Embodiments will be specifically described below with reference to the drawings.

All embodiments described below illustrate comprehensive or specific examples. Numerals, shapes, materials, constituent elements, the placement positions and connection forms of these constituent elements, steps, the sequence of these steps, and the like are only examples, and are not intended to restrict the present disclosure. Of the constituent elements described in the embodiments below, constituent elements not described in independent claims, each of which indicates the topmost concept, will be described as optional constituent elements.

### First embodiment

### 1-1. Entire structure of a risk determination system

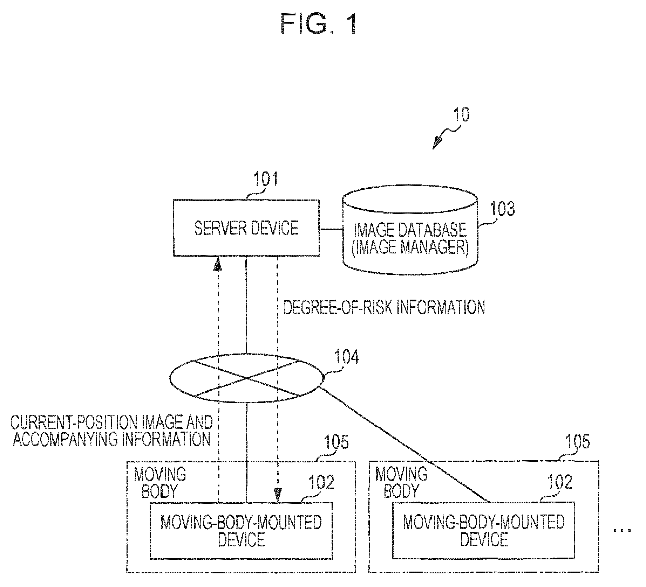

A risk determination system 10 according to a first embodiment will be described below with reference to Fig. 1. Fig. 1 is a block diagram illustrating the structure of the risk determination system 10 according to the first embodiment.

As illustrated in Fig. 1, the risk determination system 10 includes a server device 101 (an example of a risk determination device) and a plurality of moving-body-mounted devices 102 (examples of risk output devices).

The server device 101 includes an image database 103 (an example of an image manager). One or more pieces of risk occurrence information are managed (stored) in the image database 103. Risk occurrence information is data in which a risky-position image (an example of first sensor information and a first image) and accompanying information (an example of risky-position information representing a risky position) are included in correspondence to each other; the risky-position image is obtained by photographing a situation around a moving body 105 that encountered an accident, a near accident, or another risky incident at a risky position (that is, a situation in which a risky incident occurred); the accompanying information includes a date and time at which the risky-position image was taken, a position of photography, and a direction of photography (that is, a direction in which the moving body 105 that encountered a risky incident was travelling). Any methods that are generally disclosed can be used as a method of obtaining images taken by various cameras, a method of obtaining a date and time of photography, a position of photography, a direction of photography and the like, and a method of uploading images obtained by photography to the server device 101. Explanation of these methods will be omitted here.

Each of the plurality of moving-body-mounted devices 102, which is mounted in its relevant moving body 105, is connected to the server device 101 through a network 104 so that communication is possible. The moving body 105 is, for example, a vehicle driven by a user. The moving-body-mounted device 102 transmits moving body information to the server device 101 through the network 104. Moving body information is data in which a current-position image (an example of second sensor information and a second image) and accompanying information (an example of current position information indicating the current position of the moving body 105) about the current-position image are included in correspondence with each other; the current-position image is obtained by photographing a situation around the moving body 105 at the current position.

The server device 101 analyzes a traffic situation at the current position at a time when the current-position image was obtained by photography (the traffic situation is an example of a second traffic situation) on the basis of the received current-position image and its accompanying information and also analyzes a traffic situation at a risky position in the case of the occurrence of a risky incident (the traffic situation is an example of a first traffic situation) on the basis of a risky-position image managed in the image database 103 and the accompanying information of the risky-position image. The server device 101 determines a degree of risk in the situation around the moving body 105 at a time when the current-position image was obtained by photography, on the basis of a similarity between the two analyzed traffic situations, and transmits degree-of-risk information about the determined degree of risk to the moving-body-mounted device 102 through the network 104. A degree of risk is an index that indicates a possibility that a risky incident occurs at the current position at which the moving body 105 is positioned at a time when the current-position image is obtained by photography.

The moving-body-mounted device 102 outputs attention calling information to call attention to the user of the moving body 105 (or moving-body-mounted device 102) on the basis of the degree-of-risk information that the moving-body-mounted device 102 has received.

### 1-2. Structure of the server device

### 1-2-1. Entire structure of the server device

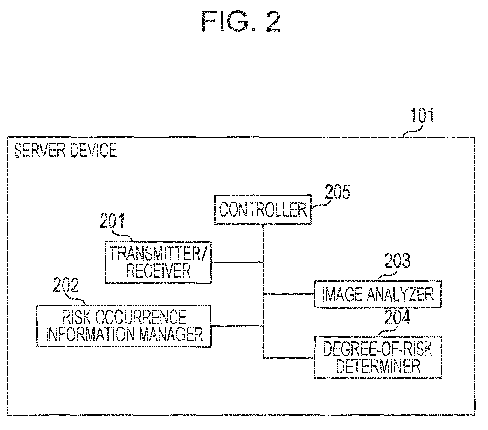

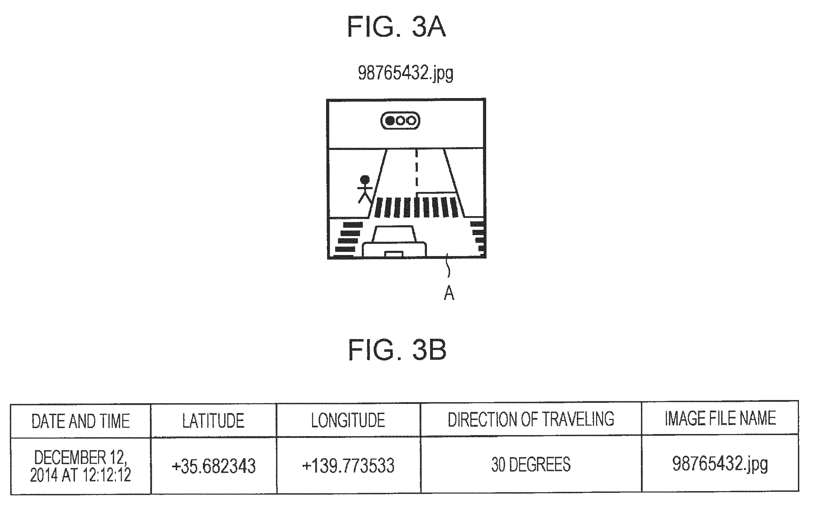

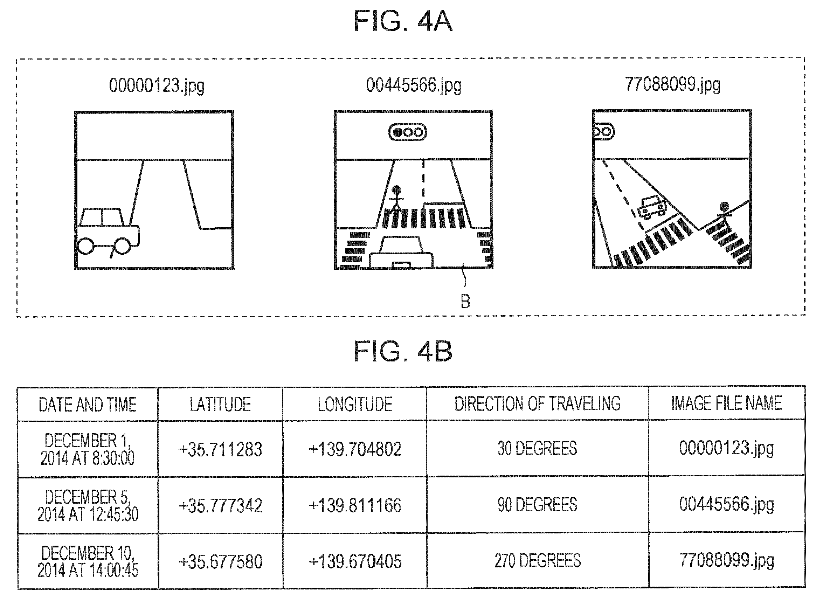

Next, the entire structure of the server device 101 will be described in detail with reference to Figs. 2 to 4B. Fig. 2 is a block diagram illustrating the structure of the server device 101 according to the first embodiment. Figs. 3A and 3B illustrate an example of moving body information according to the first embodiment. Figs. 4A and 4B illustrate an example of risk occurrence information according to the first embodiment.

As illustrated in Fig. 2, the server device 101 includes a transmitter/receiver 201 (an example of a first transmitter and a first receiver), a risk occurrence information manager 202, an image analyzer 203, a degree-of-risk determiner 204, and a controller 205.

Specifically, the server device 101 includes a microprocessor, a random-access memory (RAM), a read-only memory (ROM), and a hard disk drive (these components are not illustrated). Computer programs are stored in the RAM, ROM, and hard disk drive. When the microcomputer operates according to these computer programs, the server device 101 fulfills its functions.

The transmitter/receiver 201, risk occurrence information manager 202, image analyzer 203, degree-of-risk determiner 204, controller 205, and other functional blocks of the server device 101 are typically implemented as a large-scale integrated (LSI) chip. Each of these functional blocks may be implemented individually as one chip. Alternatively, one chip may include one or more functional blocks or part of each functional block. Although an LSI chip is referred to here, it may be referred to as an integrated circuit (IC) chip, a system LSI chip, super LSI chip, or ultra LSI chip depending on the degree of integration. Methods of using integrated circuits are not limited to LSI chips. These functional blocks may be implemented by a special circuit or a general-purpose processor. A field-programmable gate array (FPGA) that can be programmed after an LSI chip has been manufactured may be used. Alternatively, a reconfigurable processor that can reconfigure the connections and settings of circuit cells in an LSI chip may be used. If a new technology for the use of integrated circuits is substituted for LSI technologies owing to the advance of semiconductor technologies or the advent of different derivative technologies, the new technology may of course be used to integrate functional blocks. The use of bio technologies, for example, might be possible. Finally, the functional blocks in the server device 101 may be implemented by software or a combination of an LSI chip and software. Software may be tamper-resistant.

### 1-2-2. Transmitter/receiver

The transmitter/receiver 201 receives moving body information transmitted from the moving-body-mounted devices 102 through the network 104.

An example of moving body information that the transmitter/receiver 201 receives will now be described with reference to Figs. 3A and 3B. Fig. 3A illustrates an example of a current-position image included in moving body information. Fig. 3B illustrates an example of accompanying information about the current-position image included in the moving body information.

The examples in Figs. 3A and 3B indicate that a current-position image with a file name of 98765432.jpg was obtained by photography on December 12, 2014 at 12:12:12, the latitude and longitude of the photography position are respectively +35.682343 and +139.773533, and the direction of photography (traveling) is 30 degrees. The latitude and longitude information is obtained by converting coordinates in the sexagesimal system (degrees, minutes, seconds) into decimal numbers. The direction of photography (traveling) is a direction represented as an angle with north at 0 degrees, east at 90 degrees, south at 180 degrees, and west at 270 degrees.

The current-position image with a file name of 98765432.jpg in Fig. 3A was obtained by photographing a situation in which, when one's own vehicle, which is the moving body 105, was proceeding straight on a green light at an intersection with traffic lights, a pedestrian was present beside a forward crosswalk and the preceding vehicle was about to enter an area immediately before the crosswalk.

The transmitter/receiver 201 also transmits degree-of-risk information about the degree of risk determined by the degree-of-risk determiner 204, which will be described later, to the moving-body-mounted devices 102 through the network 104. A method of determining the degree of risk will be described later.

### 1-2-3. Risk occurrence information manager

The risk occurrence information manager 202 includes the image database 103 described above and manages (stores) risk occurrence information therein. Specifically, the risk occurrence information manager 202 accumulates risky-position images, which are images obtained by photographing situations around moving bodies 105 that encountered risky incidents, and manages these images in correspondence to accompanying information that includes dates and times at which the risky-position images were obtained by photography, positions of photography, directions of photography (traveling), and the like.

An example of risk occurrence information that the risk occurrence information manager 202 receives will now be described with reference to Figs. 4A and 4B. Fig. 4A illustrates an example of a risky-position image included in risk occurrence information. Fig. 4B illustrates an example of accompanying information about the risky-position image included in the risk occurrence information.

The examples in Figs. 4A and 4B indicate that a risky-position image with a file name of 00000123.jpg was obtained by photography on December 1, 2014 at 8:30:00, the latitude and longitude of the photography position are respectively +35.711283 and +139.704802, and the direction of photography (traveling) is 30 degrees. The latitude and longitude information is obtained by converting coordinates in the sexagesimal system (degrees, minutes, seconds) into decimal numbers. The direction of photography (traveling) is a direction represented as an angle with north at 0 degrees, east at 90 degrees, south at 180 degrees, and west at 270 degrees.

Risky incidents in the risky-position images illustrated in Fig. 4A will be described. A risky incident in the risky-position image with a file name of 00000123.jpg is a broadside near-accident in which, when one's own vehicle, which is the moving body 105, was proceeding straight at an intersection without traffic lights, another vehicle proceeding straight suddenly appeared from the left side. A risky incident in the risky-position image with a file name of 00445566.jpg is a rear-end near-accident in which, when one's own vehicle, which is the moving body 105, was proceeding straight on a green light at an intersection with traffic lights, a pedestrian was crossing a forward crosswalk against a red light, so the preceding vehicle applied a brake immediately before the crosswalk. A risky incident in the risky-position image with a file name of 77088099.jpg is a near accident with an opposite traverser in which, when one's own vehicle, which is the moving body 105, tried to complete a turn to the right in a hurry on a green light at an intersection with traffic lights before an oncoming vehicle came close to the intersection, a pedestrian was crossing a crosswalk ahead of the right turn.

### 1.2-4. Image analyzer

The image analyzer 203 analyzes a traffic situation at the current position at a time when the current-position image was obtained by photography on the basis of the moving body information that the transmitter/receiver 201 has received. The image analyzer 203 also analyzes traffic information at a risky position in the case of the occurrence of a risky incident on the basis of the risky-position image included in the risk occurrence information stored in the risk occurrence information manager 202.

The traffic situation represents traffic on the road on which the moving body 105 in which the moving-body-mounted device 102 is mounted. Specifically, the traffic situation represents a situation concerning a place including a road shape, a traffic environment, the behaviors of one's own vehicle, and the like. More specifically, the situation concerning a place including a road shape represents, for example, intersections, uninterrupted roads (straight roads), curves, narrow roads, and the like. The traffic environment represents, for example, the color of the lit light, the presence or absence of signs, the presence or absence of pedestrians and oncoming vehicles, the presence or absence of a preceding vehicle, and a distance between two vehicles. The behaviors of one's own vehicle represent that, for example, the vehicle is traveling straight, is turning to the right or left, is stopping, is traveling backward, is traveling at a constant speed, and is being accelerated.

Next, an example of a method of analyzing a traffic situation on the basis of the current-position image will be described with reference to Figs. 3A and 3B. If the transmitter/receiver 201 receives moving body information including a current-position image with a file name of, for example, 98765432.jpg as illustrated in Fig. 3A, the image analyzer 203 analyzes that: as for the situation concerning a place including a road shape, the intersection has traffic lights; as for the traffic environment, the color of the lit light is green, a pedestrian is present beside a forward crosswalk, and the preceding vehicle is about to enter an area immediately before the crosswalk; as for the behaviors of one's own vehicle, the vehicle is traveling straight; and the like.

An example of the method of analyzing a traffic situation on the basis of the current-position image will now be more specifically described. The situation concerning a place including a road shape can be detected by recognizing, for example, division lines and road signs drawn on roads from the current-position image. The division lines are, for example, traffic lane that indicate lanes on which vehicles travel. The road signs are, for example, a STOP marking, crosswalks, diamond markings indicating the presence of crosswalks, arrows indicating straight traveling, a right turn, and a left turn, and dashed lines indicating that a lane change is inhibited. If these road signs are present, it can be detected that the road is at an intersection. If any of these signs is not present and the division line is straight (or is curved), it can be detected that the road is an uninterrupted road (or a curved road). Furthermore, it can be detected whether the road is a narrow road, depending on the interval between adjacent division lines.

The traffic environment can be detected by recognizing the features of the colors and shapes of traffic lights, signs, pedestrians, other vehicles, and other targets from the current-position image. In addition, by recognizing headlights or taillights from the image, it can be detected whether another vehicle is an oncoming vehicle or a preceding vehicle. Furthermore, by recognizing the number plate of the preceding vehicle and characters on the number plate from the image, a distance between the vehicles can be detected according to the size of the number plate indicated on the image and a known photographing magnification.

The behaviors of one's own vehicle can be detected by focusing attention on changes in, for example, a road and buildings around it on a plurality of current-position images that are close to one another in terms of time. Alternatively, the behaviors of one's own vehicle may be detected by a change in photography positions for two current-position images that are close to each other in terms of time.

### 1-2-5. Degree-of-risk determiner

The degree-of-risk determiner 204 determines a degree of risk in a situation around the moving body 105 at a time when the current-position image was taken, on the basis of a similarity between the current-position image that the transmitter/receiver 201 has received and a risky-position image stored in the risk occurrence information manager 202. Specifically, the degree-of-risk determiner 204 determines the degree of risk described above on the basis of a similarity between the traffic situation, analyzed by the image analyzer 203, at the current position at a time when the current-position image was taken and a traffic situation at a risky position in the case of the occurrence of a risky incident. The degree-of-risk determiner 204 also creates degree-of-risk information about the determined degree of risk.

Next, an example of the method of determining a degree of risk will be described with reference to Figs. 3A, 3B, 4A, and 4B. A case will be described in which, for example, the risk occurrence information manager 202 manages the risky-position image information in Fig. 4A and its accompanying information in Fig. 4B and the transmitter/receiver 201 receives the current-position image, in Fig. 3A, with a file name of 98765432.jpg. In this case, the degree-of-risk determiner 204 calculates a similarity (degree of similarity) between the current-position image and the risky-position image with a file name of 00445566.jpg, the risky-position image being managed by the risk occurrence information manager 202, on the basis of the following traffic situation analyzed by the image analyzer 203: as for the situation concerning a place including a road shape, the intersection has traffic lights; as for the traffic environment, the color of the lit light is green, a pedestrian is present beside a forward crosswalk, and the preceding vehicle is about to enter an area immediately before the crosswalk; and as for the behaviors of one's own vehicle, the vehicle is traveling straight. If the calculated degree of similarity is, for example, 0.8, the degree-of-risk determiner 204 determines that a degree of risk in a situation around the moving body 105 at a time when the current-position image with a file name of 98765432.jpg was taken is 0.8. The degree of risk is represented by a count with a granularity of a 0.1 step from 0 to 1.0; 0 indicates that there is no risk, and 1.0 indicates the degree of risk is highest.

An example of the method of calculating a similarity between the risky-position image and the current-position image will now be described. A similarity can be calculated by using, for example, or an image search method called content-based image retrieval (CBIR). CBIR is known as a method of detecting an image similar to a given image from a database on the basis of the degree of similarity of colors, object shapes, object texture (feels and patterns of objects), and other image feature values. In CBIR, when the risk occurrence information manager 202 is searched for on the basis of a degree of similarity in image feature values about the traffic situation analyzed by the image analyzer 203, a risky-position image having a high similarity can be obtained.

An example of a method of creating degree-of-risk information about the determined degree of risk will be described. For example, a determined degree of risk (which is 0.8 in the above example of the method of determining a degree of risk) can be used as degree-of-risk information without alteration. However, there is no limitation on degree-of-risk information; anything can be used if it can be output to call attention to the user of the moving body 105 (for example, the driver of a vehicle). For example, any text information or voice may be used. The degree-of-risk information does not need to be created each time a degree of risk is determined. Any text information, any voice, or the like may be selected from already-stored text information, voices, or the like as the degree-of-risk information. If, for example, any text information, any voice, or the like is used as the degree-of-risk information, it is desirable to use text information, a voice, or the like through which the user of the moving body 105 can recognize the degree of risk. 1-2-6. Controller

The controller 205 implements the functions of the server device 101 by managing and controlling the transmitter/receiver 201, risk occurrence information manager 202, image analyzer 203, and degree-of-risk determiner 204 described above.

### 1-3. Structure of the moving-body-mounted device

### 1-3-1. Entire structure of the moving-body-mounted device

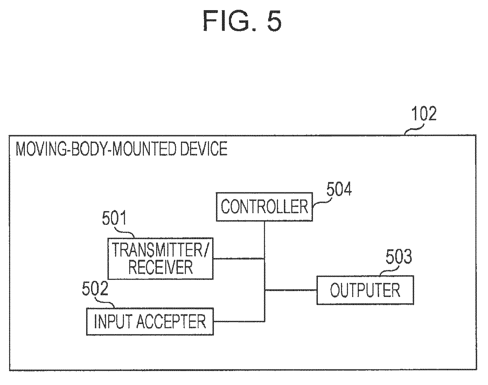

Next, the entire structure of the moving-body-mounted device 102 will be described in detail with reference to Fig. 5. Fig. 5 is a block diagram illustrating the structure of the moving-body-mounted device 102 according to the first embodiment.

As illustrated in Fig. 5, the moving-body-mounted device 102 includes a transmitter/receiver 501 (an example of a second transmitter and a second receiver), an input accepter 502, an outputer 503, and a controller 504.

Specifically, the moving-body-mounted device 102 includes a microprocessor, a RAM, a ROM, and a hard disk drive (these components are not illustrated). Computer programs are stored in the RAM, ROM, and hard disk drive. When the microcomputer operates according to these computer programs, the moving-body-mounted device 102 fulfills its functions.

The transmitter/receiver 501, input accepter 502, outputer 503, controller 504, and other functional blocks are typically implemented as a LSI chip. Each of these functional blocks may be implemented individually as one chip. Alternatively, one chip may include one or more functional blocks or part of each functional block. Although an LSI chip is referred to here, it may be referred to as an IC chip, a system LSI chip, super LSI chip, or ultra LSI chip depending on the degree of integration. Methods of using integrated circuits are not limited to LSI chips. These functional blocks may be implemented by a special circuit or a general-purpose processor. An FPGA that can be programmed after an LSI chip has been manufactured may be used. Alternatively, a reconfigurable processor that can reconfigure the connections and settings of circuit cells in an LSI chip may be used. If a new technology for the use of integrated circuits is substituted for LSI technologies owing to the advance of semiconductor technologies or the advent of different derivative technologies, the new technology may of course be used to integrate functional blocks. The use of bio technologies, for example, might be possible. Finally, the functional blocks in the moving-body-mounted device 102 may be implemented by software or a combination of an LSI chip and software. Software may be tamper-resistant.

### 1-3-2. Transmitter/receiver

The transmitter/receiver 501 transmits moving body information that the input accepter 502 has received to the server device 101 through the network 104.

The transmitter/receiver 501 also receives degree-of-risk information that has been transmitted from the server device 101 through the network 104.

### 1-3-3. Input accepter

The input accepter 502 accepts moving body information as an input. Specifically, the input accepter 502 accepts, as an input, a current-position image, which is an image obtained by photographing a situation around the moving body 105 at the current position, and accompanying information about the current-position image.

The current-position image is an image taken with, for example, a vehicle-mounted camera, a drive recorder, or a camera included in a smart phone. Any methods that are generally disclosed can be used as a method of obtaining images taken by various cameras and a method of obtaining a date and time of photography, a position of photography, a direction of photography (travel), and the like. Explanation of these methods will be omitted here.

### 1-3-4. Outputer

The outputer 503 outputs attention calling information to call attention to the user of the moving body 105 (or moving-body-mounted device 102) on the basis of the degree-of-risk information that the transmitter/receiver 501 has received. If the attention calling information is, for example, text information, when the attention calling information is output to a display or the like (not illustrated) mounted on the moving body 105, text information that calls attention to the user (such as a character string "the degree of risk for the occurrence of a rear-end near-accident is 0.8") is displayed on the display. If the attention calling information is a voice, when the attention calling information is output to a speaker or the like (not illustrated) mounted in the moving body 105, a voice that calls attention to the user (such as a vocal message "the degree of risk for the occurrence of a rear-end near-accident is 0.8") is output from the speaker.

### 1-3-5. Controller

The controller 504 implements the functions of the moving-body-mounted device 102 by managing and controlling the transmitter/receiver 501, input accepter 502, and outputer 503 described above.

### 1-4. Operations of the risk determination system

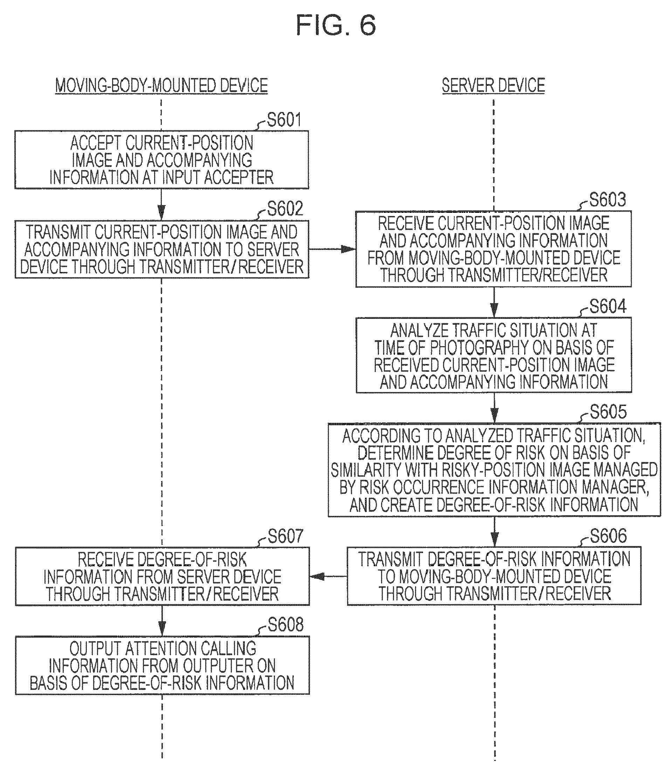

Next, the operations of the risk determination system 10 (risk determination method) will be described with reference to Fig. 6. Fig. 6 is a sequence diagram illustrating a flow of operations performed by the risk determination system 10 according to the first embodiment.

The moving-body-mounted device 102 first accepts, at the input accepter 502 as an input, a current-position image obtained by photographing a situation around the moving body 105, in which the moving-body-mounted device 102 is mounted, and accompanying information about the current-position image (S601). The moving-body-mounted device 102 then transmits the accepted current-position image and accompanying information to the server device 101 through the transmitter/receiver 501 (S602).

The server device 101 receives the current-position image and accompanying information from the moving-body-mounted device 102 through the transmitter/receiver 201 (S603). The server device 101 then analyzes, on the basis of the current-position image and accompanying information received at the image analyzer 203, the traffic situation at the current position at a time when the current-position image was obtained by photography (S604). According to the analyzed traffic situation, the server device 101 then determines, in the degree-of-risk determiner 204, a degree of risk in a situation around the moving body 105 at a time when the received current-position image had been taken, on the basis of a similarity between the current-position image and a risky-position image managed by the risk occurrence information manager 202, after which the server device 101 creates degree-of-risk information about the determined degree of risk (S605).

At this time, a risky-position image corresponding to the current position (for example, intersection A represented on the current-position image, illustrated in Fig. 3A, with a file name of 98765432.jpg) may not be managed in the risk occurrence information manager 202 and a risky-position image corresponding to a position (for example, intersection B represented on the current-position image, illustrated in Fig. 4A, with a file name of 00445566.jpg) other than the current position may be managed in the risk occurrence information manager 202. In this case, the degree-of-risk determiner 204 determines a degree of risk on the basis of a similarity between the current-position image and a risky-position image corresponding to a position (for example, intersection B described above) other than the current position.

If a risky-position image corresponding to the current position (for example, intersection A described above) and a risky-position image corresponding to a position (for example, intersection B described above) other than the current position are both managed in the risk occurrence information manager 202, the degree-of-risk determiner 204 searches for the risky-position image corresponding to the current position or the risky-position image corresponding to a position other than the current position, whichever has a higher similarity with the current-position image. If the risky-position image corresponding to a position (for example, intersection B described above) other than the current position has a higher similarity with the current-position image, the degree-of-risk determiner 204 determines a degree of risk on the basis of the similarity between the current-position image and the risky-position image corresponding to the position other than the current position. If the risky-position image corresponding to the current position has a higher similarity with the current-position image, the degree-of-risk determiner 204 may determine a degree of risk on the basis of the similarity between the current-position image and the risky-position image corresponding to the current position.

If the degree of risk is within a prescribed range, the server device 101 transmits the created degree-of-risk information to the moving-body-mounted device 102 through the transmitter/receiver 201 (S606). The degree of risk is determined to be within the prescribed range if, for example, the degree of risk exceeds a preset threshold (for example, 0.5). The moving-body-mounted device 102 to which the degree-of-risk information is transmitted is, for example, the moving-body-mounted device 102 from which the moving body information that the server device 101 has received had been transmitted.

The moving-body-mounted device 102 receives the degree-of-risk information about the degree of risk determined by the server device 101 from the server device 101 through the transmitter/receiver 501 (S607). The moving-body-mounted device 102 then outputs attention calling information from the outputer 503 to call attention to the user of the moving body 105 (or moving-body-mounted device 102) on the basis of the received degree-of-risk information (S608).

### 1-5. Examples of applying the risk determination system

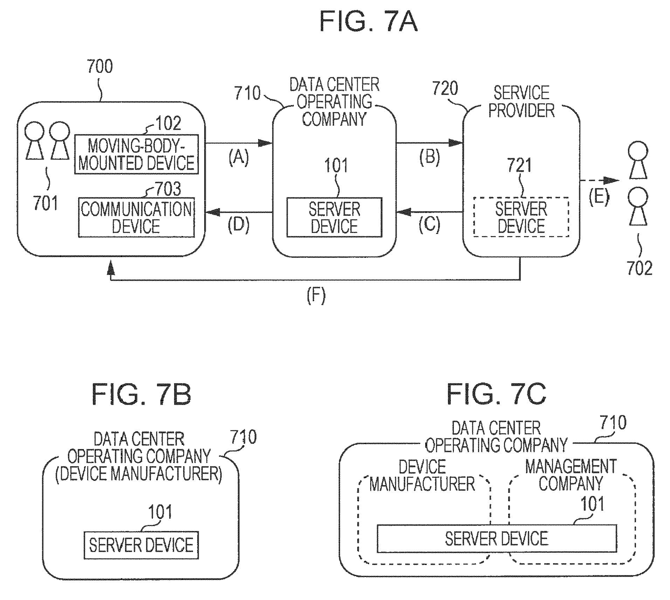

Next, examples of services in which the risk determination system 10 according to the first embodiment is applied will be described with reference to Figs. 7A, 7B, and 7C. Figs. 7A, 7B, and 7C illustrate examples of services in which the risk determination system 10 according to the first embodiment is applied.

A group 700 illustrated in Fig. 7A is, for example, a company, an organization, or a family. The size of the group 700 is not important. A plurality of moving-body-mounted devices 102 and communication devices 703 are included in the group 700. Each of the plurality of moving-body-mounted devices 102 is a device (such as a car navigation device, a smartphone, a tablet, a personal computer, or another device having a communication module) that is connectable directly to the Internet. Each of the plurality of moving-body-mounted devices 102 may be a device that, if the moving-body-mounted device 102 is not connectable directly to the Internet by itself, is connectable to the Internet through the communication device 703. Users 701 who use a plurality of moving-body-mounted devices 102 are present in the group 700.

In a data center operating company 710 illustrated in Fig. 7A, the server device 101 described above is present. The server device 101 is a virtual server linked to various devices through the Internet. The server device 101 mainly manages a huge amount of data (big data) or the like that is hard to handle with an ordinary database management tool or the like. The data center operating company 710 manages data and server device 101, operates a data center that performs their management, and performs other tasks. The tasks performed by the data center operating company 710 will be described later in detail.

The data center operating company 710 is not limited to a company that performs only data management, operation of the server device 101, and the like. If, for example, a device manufacturer that develops and manufactures one of the plurality of moving-body-mounted devices 102 also performs management of data and the server device 101 and other tasks as illustrated in Fig. 7B, the device manufacturer is the data center operating company 710.

The number of data center operating companies 710 is not limited to one. In a case in which, as illustrated in Fig. 7C, a device manufacturer and a management company different from it, for example, perform data management, operation of the server device 101, and other tasks jointly or share these tasks, both or one of them is the data center operating company 710.

A service provider 720 illustrated in Fig. 7A has a server device 721. The size of the server device 721 is not important. It may be, for example, a memory in a personal computer. A case in which the service provider 720 lacks the server device 721 is also possible.

Next, a flow of information in a service in which the risk determination system 10 is applied will be described with reference to Fig. 7A.

First, the moving-body-mounted device 102 in the group 700 transmits a current-position image obtained by photographing a situation around the moving body 105 (see Fig. 1) in which the moving-body-mounted device 102 is mounted and accompanying information about the current-position image to the server device 101 in the data center operating company 710. The server device 101 accumulates the current-position image and accompanying information transmitted from the moving-body-mounted device 102 ((A) in Fig. 7A). Current-position images and accompanying information may be transmitted directly from a plurality of moving-body-mounted devices 102 by themselves to the server device 101 through the Internet. Alternatively, current-position images and accompanying information may be transmitted from a plurality of moving-body-mounted devices 102 to the server device 101 through the communication device 703.

Next, the server device 101 in the data center operating company 710 provides accumulated current-position images and accompanying information to the service provider 720 in constant units. The unit in which the data center operating company 710 provides information may be a unit in which accumulated current-position images and accompanying information can be organized and the organized information can be provided to the service provider 720. Alternatively, a unit requested by the service provider 720 may be used. The data center operating company 710 may not provide information in constant units; the amount of information provided may vary depending on the situation.

Current-position images and accompanying information are stored in the server device 721 included in the service provider 720, as necessary ((B) in Fig. 7A). The service provider 720 then organizes the current-position images and accompanying information to information (degree-of-risk information or attention calling information output according to it) suitable for a service to be provided to the user and provides the organized information to the user. The user to which the information is provided may be the user 701 who uses plurality of moving-body-mounted devices 102 or an external user 702.

Current-position images and accompanying information may be provided, for example, from the service provider 720 directly to the external user 702 (or user 701) ((E) or (F) in Fig. 7A) or may be provided to the user 701 by being passed through the server device 101 in the data center operating company 710 again ((C) and (D) in Fig. 7A). The server device 101 in the data center operating company 710 may organize current-position images and accompanying information suitable for a service to be provided to the user and may provide the organized information to the service provider 720. The user 701 and external user 702 may be different users or may be the same user.

### 1-6. Effects

Next, effects obtained by the risk determination system 10 according to the first embodiment will be described. As described above, even if risk occurrence information corresponding to the current position (for example, intersection A described above) indicated in accompanying information related to a current-position image is not stored in the risk occurrence information manager 202, the degree-of-risk determiner 204 determines a degree of risk on the basis of a similarity between the current-position image and a risky-position image included in the risk occurrence information corresponding to a position (for example, intersection B described above) other than the current position. Thus, even if the moving body 105 passes through a position (for example, intersection A described above) other than a risky position corresponding to risk occurrence information managed in the risk occurrence information manager 202, the degree-of-risk determiner 204 can precisely determine a degree of risk, so the user of the moving body 105, for example, can be informed or warned of a risk.

### 1-7. Modifications of the first embodiment

### 1-7-1. First modification

Risky-position images managed by the server device 101 in the risk occurrence information manager 202 do not need to be images themselves obtained by photography. These images may be edited so that the degree-of-risk determiner 204 can easily calculate a degree of similarity with a current-position image. Alternatively, one or more risky-position images edited in this way may be managed as new images, in correspondence to their original risky-position image.

Specifically, a risky-position image may be edited to, for example, a binary image on which image feature values concerning traffic situations are enhanced, traffic situations being related to a situation concerning a place including a road shape, a traffic environment, and the behaviors of one's own vehicle. Alternatively, the binary image may be managed in correspondence to its original risky-position image.

In addition, the image feature values concerning traffic situations may be managed as a plurality of binary images classified into the situation concerning a place including a road shape, the traffic environment, the behaviors of one's own vehicle, and the like, in correspondence to their original risky-position image. In this case, the degree-of-risk determiner 204 preferably calculates a similarity between the current-position image and, for example, the risky-position image edited to a binary image, instead of a similarity between the current-position image and its original risky-position image.

### 1-7-2. Second modification

Accompanying information about a risky-position image managed by the server device 101 in the risk occurrence information manager 202 does not need to be a value itself obtained at the time of photography. Accompanying information may be replaced with a granularity that is significant when the degree-of-risk determiner 204 calculates a degree of similarity between a current-position image and a risky-position image (or a granularity that enables a degree of similarity to be easily calculated). Alternatively, accompanying information about the granularity may be newly added.

Specifically, examples of granularities that are significant for a date and time of photography (or granularities that enable a degree of similarity to be easily calculated) include 24 time slots, starting from zero o'clock, at one-hour intervals, am/pm, days and months, days of the week, seasons, holidays, and days indicated by a multiple of five (5, 10, 15, 20, 25, and 30). Examples of granularities that are significant for a position of photography (or granularities that enable a degree of similarity to be easily calculated) include rectangular regions with the same size into which map information is divided and road segments with a predetermined distance into which a road is divided. Examples of granularities that are significant for a direction of photography (traveling) (or granularities that enable a degree of similarity to be easily calculated) include four directions (north, south, east, and west), eight directions (north, south, east, west, northeast, southeast, northwest and southwest), and uphill/downhill roads.

Accompanying information about a risky-position image managed by the server device 101 in the risk occurrence information manager 202 does not need to be limited to a traffic situation at the time of photography. Accompanying information may include various types of attribute information about the moving body 105 in which the moving-body-mounted device 102 that obtained the current-position image is mounted. In this case, the degree-of-risk determiner 204 preferably calculates not only a similarity between the current-position image and the risky-position image but also a similarity with these various types of attribute information included. Various types of attribute information are, for example, the weight, displacement, and type of one's own vehicle, which is the moving body 105. Types of one's own vehicle include, for example, sedans, vans, and tracks. These types of attribute information are specific for each moving body 105. For example, attribute information can be obtained by setting it in the moving-body-mounted device 102 in advance according to the moving body 105 or by another method.

### 1-7-3. Third modification

Accompanying information about a risky-position image managed by the server device 101 in the risk occurrence information manager 202 may include information that explains an accident, a near accident, or another risky incident represented on a risky-position image. In addition, degree-of-risk information created by the server device 101 in the degree-of-risk determiner 204 may include part or all of information that explains a risky incident.

An example of information that explains a risky incident will now be described with reference to Fig. 4A. As illustrated in Fig. 4A, information that explains a risky incident about the risky-position image with a file name of 00000123.jpg is, for example, a broadside near-accident. Information that explains a risky incident about the risky-position image with a file name of 00445566.jpg is, for example, a rear-end near-accident. Information that explains a risky incident about the risky-position image with a file name of 77088099.jpg is, for example, a near accident with an opposite traverser.

An example of creating degree-of-risk information in the above cases will be described. If, for example, the server device 101 receives the current-position image with a file name of 98765432.jpg, illustrated in Fig. 3A, at the transmitter/receiver 201 and determines, in the degree-of-risk determiner 204, that the degree of risk is 0.8 on the basis of a similarity between the current-position image and the risky-position image with a file name of 00445566.jpg, illustrated in Fig. 4A, degree-of-risk information created in the degree-of-risk determiner 204 is, for example, "the degree of risk for the occurrence of a rear-end near-accident is 0.8".

### 1-7-4. Fourth modification

Accompanying information about a current-position image that the server device 101 receives from the moving-body-mounted device 102 does not need to be limited to information about photography of a current-position image. Accompanying information may include various types of sensor information (an example of third sensor information) obtained from sensors that are mounted separately on the moving body 105, the sensor information indicating a traveling situation of the moving body 105. In this case, the degree-of-risk determiner 204 preferably calculates not only a similarity between the current-position image and the risky-position image but also a similarity with these various types of sensor information included.

The various types of sensor information is the traveling speed, acceleration, angular speed, and the like of the moving body 105 that are obtained from, for example, a positional sensor in the global positioning system (GPS) or the like, an acceleration sensor, and an angular speed sensor such as a gyroscope. In addition, the sensor information is not limited to the above information. For example, the sensor information may include any information that is necessary for the image analyzer 203 to analyze a traffic situation. If, for example, the moving body 105 is a vehicle, the sensor information may indicate a steering wheel operation, a brake operation, an acceleration operation, a wiper operation, and the like. Sensor information of these types can be obtained from an intra-vehicle network such as, for example, a control area network (CAN).

Accompanying information about a current-position image that the server device 101 receives from the moving-body-mounted device 102 may include various types of attribute information about the moving body 105 in which the moving-body-mounted device 102 that obtained the current-position image is mounted. In this case, the degree-of-risk determiner 204 preferably calculates not only a similarity between the current-position image and the risky-position image but also a similarity with these various types of attribute information included. Various types of attribute information is, for example, the weight, displacement, and type of one's own vehicle, which is the moving body 105. Types of one's own vehicle include, for example, sedans, vans, and tracks. These types of attribute information are specific for each moving body 105. For example, attribute information can be obtained by setting it in the moving-body-mounted device 102 in advance according to the moving body 105 or by another method.

### 1-7-5. Fifth modification

The server device 101 does not necessarily perform analysis processing in the image analyzer 203 to analyze a traffic situation and similarity calculation processing in the degree-of-risk determiner 204 to calculate a similarity between a current-position image and a risky-position image individually in succession. If, for example, a machine learning method called deep learning is used, analysis processing and similarity calculation processing may be performed concurrently. 1-7-6. Sixth modification

The server device 101 may also manage the seriousness of risky incidents that the moving body 105 encountered in the risk occurrence information manager 202 as accompanying information about the relevant risky-position images, in correspondence to the relevant risky-position images. In this case, to determine a degree of risk in a situation around the moving body 105 at a time when the current-position image was obtained by photography, the degree-of-risk determiner 204 may, for example, multiply a degree of similarity between the current-position image and risky-position image that are most similar to each other by seriousness managed in correspondence to the risky-position image.

There is no limitation on seriousness if it represents the degree of seriousness of a risky incident that the moving body 105 encountered on the basis of a predetermined reference. Seriousness is represented by converting a degree of seriousness such as, for example, the occurrence or non-occurrence of an accident, the degree of human damage, or the amount of paid insurance into, for example, a count with a granularity of a 0.1 step from 0 to 1.0. The degree of seriousness only needs to have been obtained in advance by any method from, for example, records of accidents or near-accidents that are held by the police, a carrier, or the like, or from accident assessment information or the like held by a nonlife insurance company or the like. Explanation of the method will be omitted here.

### 1-7-7. Seventh modification

If the degree of risk determined by the degree-of-risk determiner 204 is within a predetermined range, the server device 101 may accumulate (add) the current-position image that the transmitter/receiver 201 has received in the risk occurrence information manager 202 as a new risky-position image and may manage it in correspondence to the accompanying information about the current-position image. The degree of risk is determined to be within the prescribed range if, for example, the degree of risk exceeds a preset threshold (for example, 0.5).

### 1-7-8. Eighth modification

The moving-body-mounted device 102 to which the degree-of-risk information about the degree of risk determined by the server device 101 is transmitted does not need to be the moving-body-mounted device 102 from which the moving body information that the server device 101 has received had been transmitted. If, for example, the moving body 105 is a vehicle, degree-of-risk information about the degree of risk, at a specific position, that was determined on the basis of a current-position image transmitted from the preceding vehicle may be transmitted to the moving-body-mounted device 102 mounted in the following vehicle (another moving body 105) that is decided to pass the specific position after a little delay (for example, within a predetermined time of the reception of moving body information). Thus, it is possible to call attention to the user (driver) of the following vehicle.

### Second embodiment

### 2-1. Entire structure of a risk determination system

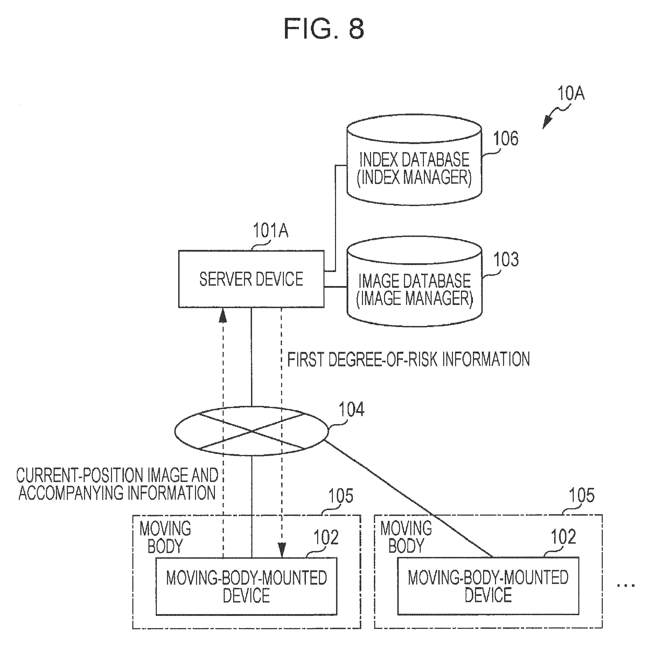

The entire structure of a risk determination system 10A according to a second embodiment will be described below with reference to Fig. 8. Fig. 8 is a block diagram illustrating the structure of the risk determination system 10A according to the second embodiment. In this embodiment, constituent elements that are the same as in the first embodiment will be given the same reference numerals and descriptions will be omitted.

As illustrated in Fig. 8, the risk determination system 10A includes a server device 101 A and a plurality of moving-body-mounted devices 102. The moving-body-mounted device 102 is the same as described in the first embodiment.

In addition to the image database 103 described in the first embodiment, the server device 101A includes an index database 106 (an example of an index manager). In the index database 106, risk indexes (risk determination information) about the degrees of risk of risky incidents, such as accidents and near accidents, that occurred in the past are managed (stored) in correspondence to accompanying information that includes dates and times at which the risky incidents occurred, positions at which the risky incidents occurred, directions in which the risky incidents occurred (that is, directions in which the moving body 105 was traveling), and the like. Risk indexes only need to have been obtained in advance by any method from, for example, records of accidents or near-accidents that are held by the police, a carrier, or the like, or from accident assessment information or the like held by a nonlife insurance company or the like. Explanation of the method will be omitted here.

The server device 101 A determines a first degree of risk, which is a degree of risk in a situation around the moving body 105 at a time when the current-position image was obtained by photography, on the basis of a similarity between accompanying information received from the moving-body-mounted device 102 and a risk index managed in the index database 106. The server device 101A then transmits first degree-of-risk information about the determined first degree of risk to the moving-body-mounted device 102 through the network 104.

The server device 101A analyzes the traffic situation at a time when the current-position image was obtained by photography on the basis of the current-position image received from the moving-body-mounted device 102 and the accompanying information about the current-position image, and determines a second degree of risk, which is a degree of risk in a situation around the moving body 105 at a time when the current-position image was obtained by photography, on the basis of a similarity between the current-position image and a risky-position image managed in the image database 103. If the determined second degree of risk is within a predetermined range, the server device 101 A accumulates (adds) the second degree-of-risk information about the determined second degree of risk in the index database 106 as a new risk index and manages it in correspondence to the accompanying information about the current-position image. The second degree of risk is determined to be within the prescribed range if, for example, the second degree of risk exceeds a preset threshold (for example, 0.5).

### 2-2. Structure of the server device

### 2-2-1. Entire structure of the server device

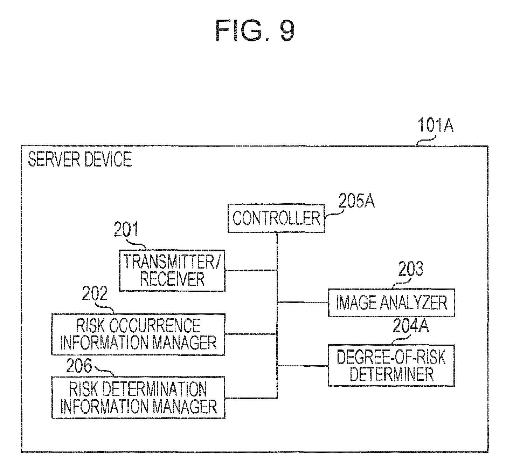

Next, the entire structure of the server device 101A will be described in detail with reference to Fig. 9. Fig. 9 is a block diagram illustrating the structure of the server device 101A according to the second embodiment.

In addition to the transmitter/receiver 201, the risk occurrence information manager 202, the image analyzer 203, a degree-of-risk determiner 204A, and a controller 205A, the server device 101A includes a risk determination information manager 206, as illustrated in Fig. 9.

Specifically, the server device 101A includes a microprocessor, a RAM, a ROM, and a hard disk drive (these components are not illustrated). Computer programs are stored in the RAM, ROM, and hard disk drive. When the microcomputer operates according to these computer programs, the server device 101A fulfills its functions.

The transmitter/receiver 201, risk occurrence information manager 202, image analyzer 203, degree-of-risk determiner 204A, controller 205A, risk determination information manager 206, and other functional blocks of the server device 101A are typically implemented as an LSI chip. Each of these functional blocks may be implemented individually as one chip. Alternatively, one chip may include one or more functional blocks or part of each functional block. Although an LSI chip is referred to here, it may be referred to as an IC chip, a system LSI chip, super LSI chip, or ultra LSI chip depending on the degree of integration. Methods of using integrated circuits are not limited to LSI chips. These functional blocks may be implemented by a special circuit or a general-purpose processor. An FPGA that can be programmed after an LSI chip has been manufactured may be used. Alternatively, a reconfigurable processor that can reconfigure the connections and settings of circuit cells in an LSI chip may be used. If a new technology for the use of integrated circuits is substituted for LSI technologies owing to the advance of semiconductor technologies or the advent of different derivative technologies, the new technology may of course be used to integrate functional blocks. The use of bio technologies, for example, might be possible. Finally, these functional blocks may be implemented by software or a combination of an LSI chip and software. Software may be tamper-resistant.

### 2-2-2. Transmitter/receiver

The transmitter/receiver 201 is the same as described in the first embodiment except that it transmits the first degree-of-risk information about the first degree of risk determined by the degree-of-risk determiner 204A to the moving-body-mounted device 102.

### 2-2-3. Risk occurrence information manager

The risk occurrence information manager 202 is the same as described in the first embodiment.

### 2.2-4. Image analyzer

The image analyzer 203 is the same as described in the first embodiment.

### 2-2-5. Degree-of-risk determiner

The degree-of-risk determiner 204A determines the first degree of risk, which is a degree of risk in a situation around the moving body 105 at a time when the current-position image was obtained by photography, on the basis of a similarity between accompanying information about the current-position image received at the transmitter/receiver 201 and risk determination information managed in the risk determination information manager 206, after which the degree-of-risk determiner 204A creates first degree-of-risk information about the determined first degree of risk. The method of creating first degree-of-risk information is the same as described in the first embodiment.

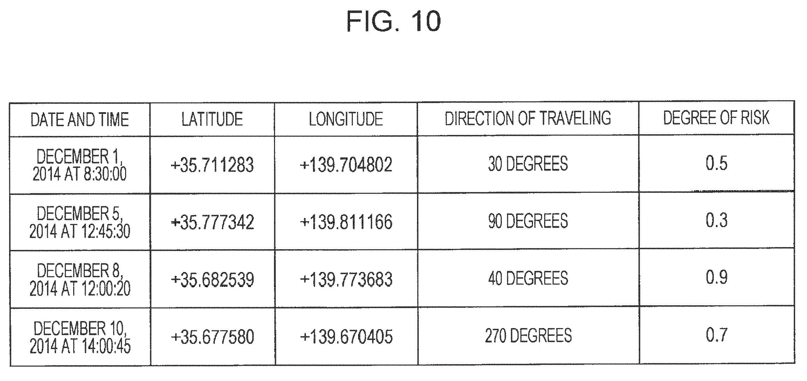

An example of the method of determining the first degree of risk will be described here. It will be assumed that the risk determination information manager 206 manages, for example, the risk determination information in Fig. 10, which will be described later and that the transmitter/receiver 201 has received the accompanying information in Fig. 3B about the current-position image with a file name of 98765432.jpg. In this case, in view of the time slots in both the risk determination information and the accompanying information being the same (from 12 o'clock to 13 o'clock), the positions (latitude and longitude) and directions of traveling between them being close to each other, and the like, the degree-of-risk determiner 204A determines that the first degree of risk is 0.9 on the basis of a similarity between the accompanying information about the current-position image and the risk determination information about the risky incident that occurred on December 8, 2014 at 12:00:20.

On the basis of the traffic situation analyzed by the image analyzer 203, the degree-of-risk determiner 204A also determines the second degree of risk, which is a degree of risk in a situation around the moving body 105 at a time when the current-position image that the transmitter/receiver 201 received had been obtained by photography, on the basis of a similarity between the current-position image and a risky-position image managed in the risk occurrence information manager 202. The degree-of-risk determiner 204A then creates second degree-of-risk information about the determined second degree of risk. The method of calculating a similarity between the risky-position image and the current-position image, the method of determining a second degree of risk, and the method of creating second degree-of-risk information are the same as described in the first embodiment.

### 2-2-6. Risk determination information manager

The risk determination information manager 206 includes the index database 106 described above and manages (stores) risk determination information in it. Specifically, the risk determination information manager 206 accumulates risk determination information about the degrees of risk of risky incidents, such as accidents and near accidents, that occurred in the past and manages the risk determination information in correspondence to accompanying information that includes dates and times at which the risky incidents occurred, positions at which the risky incidents occurred, directions in which the risky incidents occurred (directions of traveling), and the like.

An example of risk determination information managed by the risk determination information manager 206 will now be described with reference to Fig. 10. Fig. 10 illustrates an example of risk determination information according to the second embodiment.

In the example in Fig. 10, risky incidents, such as accidents and near accidents, that occurred on December 1, 2014 at 8:30:00, on December 5, 2014 at 12:45:30, on December 8, 2014 at 12:00:20, and on December 10, 2014 at 14:00:45 are managed in correspondence to dates and times of their occurrence, their positions, and their photography directions of photography (traveling). For example, it is indicated that on December 1, 2014 at 8:30:00, a risky incident, such as an accident or near accident, for which a degree of risk is 0.5 occurred during traveling at a position +35.711283 latitude and +139.704802 longitude in a direction of traveling at 30 degrees.

The latitude and longitude information is obtained by converting coordinates in the sexagesimal system (degrees, minutes, seconds) into decimal numbers. The direction of photography (traveling) is a direction represented as an angle with north at 0 degrees, east at 90 degrees, south at 180 degrees, and west at 270 degrees. The degree of risk is a count with a granularity of a 0.1 step from 0 to 1.0; 0 indicates that there is no risk, and 1.0 indicates the degree of risk is highest. However, this is not a limitation on the method of representing a degree of risk. For example, an upper limit that indicates the degree of risk is highest, a granularity (for example, an integer or a number with a 0.1 step), and the like can be arbitrarily determined and used.

If the second degree of risk determined by the degree-of-risk determiner 204A is within a predetermined range, the risk determination information manager 206 accumulates (adds) the second degree-of-risk information about the second degree of risk as a new risk index and manages it in correspondence to the accompanying information about the current-position image. The second degree of risk is determined to be within the prescribed range if, for example, the second degree of risk exceeds a preset threshold (for example, 0.5).

### 2-2-7. Controller

The controller 205A implements the functions of the server device 101A by managing and controlling the transmitter/receiver 201, risk occurrence information manager 202, image analyzer 203, degree-of-risk determiner 204A, and risk determination information manager 206 described above.

### 2-3. Moving-body-mounted device

Basically, the moving-body-mounted device 102 is the same as described in the first embodiment. The transmitter/receiver 501 (see Fig. 5) in the moving-body-mounted device 102 transmits a current-position image and its accompanying information to the server device 101A and receives first degree-of-risk information from the server device 101 A. On the basis of the received first degree-of-risk information, the outputer 503 (see Fig. 5) in the moving-body-mounted device 102 outputs attention calling information.

### 2-4. Operations of the risk determination system

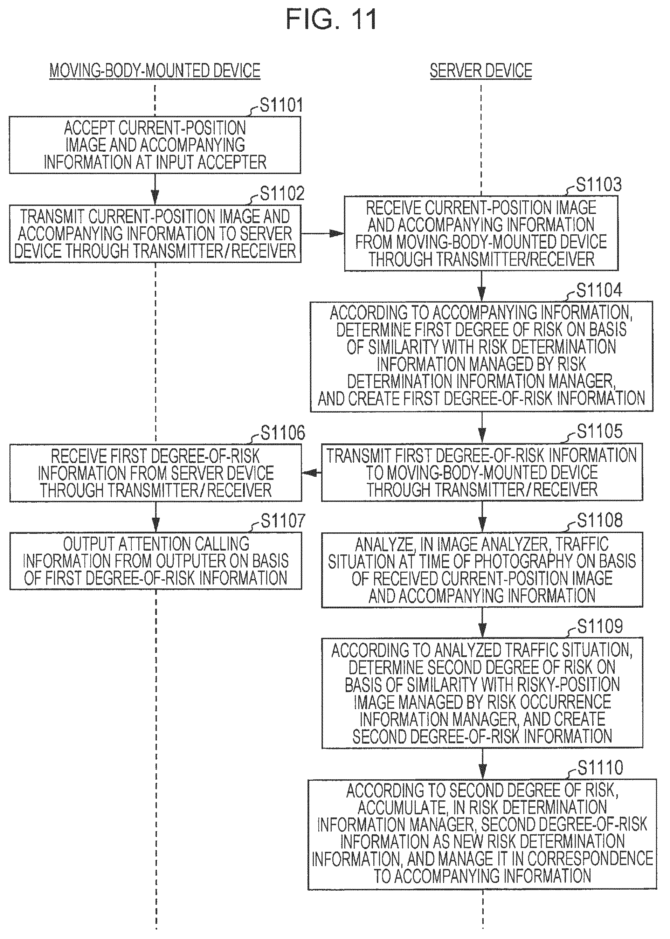

Next, the operations of the risk determination system 10A (risk determination method) will be described with reference to Fig. 11. Fig. 11 is a sequence diagram illustrating a flow of operations performed by the risk determination system 10A according to the second embodiment.

The moving-body-mounted device 102 accepts, as an input, a current-position image obtained by photographing a situation around the moving body 105, in which the moving-body-mounted device 102 is mounted, and accompanying information about the current-position image at the input accepter 502 (see Fig. 5) (S1101). The moving-body-mounted device 102 then transmits the accepted current-position image and accompanying information to the server device 101A through the transmitter/receiver 501 (S1102).

The server device 101A receives the current-position image and accompanying information from the moving-body-mounted device 102 through the transmitter/receiver 201 (S1103). If risk determination information corresponding to the current position indicated in the accompanying information about the received current-position image is managed in the risk determination information manager 206, the server device 101A then determines, in the degree-of-risk determiner 204A, a first degree of risk on the basis of a similarity between the risk determination information and the accompanying information about the current-position image and creates first degree-of-risk information about the determined first degree of risk (S1104). If the first degree of risk is within a predetermined range, the server device 101A transmits the created first degree-of-risk information to the moving-body-mounted device 102 through the transmitter/receiver 201 (S1105).

The moving-body-mounted device 102 receives the first degree-of-risk information from the server device 101A through the transmitter/receiver 501 (S1106). The moving-body-mounted device 102 then outputs attention calling information from the outputer 503 to call attention to the user of the moving body 105 (or moving-body-mounted device 102) on the basis of the received first degree-of-risk information (S1107).

The server device 101A also analyzes, in the image analyzer 203, the traffic situation at a time when the current-position image was obtained by photography on the basis of the received current-position image and accompanying information (S1108). According to the analyzed traffic situation, the server device 101 A then determines, in the degree-of-risk determiner 204A, a second degree of risk in a situation around the moving body 105 at a time when the received current-position image was taken, on the basis of a similarity between the current-position image and a risky-position image managed by the risk occurrence information manager 202, after which the server device 101A creates second degree-of-risk information about the determined second degree of risk (S1109). The server device 101A then accumulates (adds), in the risk determination information manager 206, the determined second degree-of-risk information as a new risk determination information and manages it in correspondence to the accompanying information about the current-position image (S1110).

### 2-5. Examples of applying the risk determination system

Examples of applying the risk determination system 10A in the second embodiment are as described in the first embodiment.

### 2-6. Effects

Next, effects obtained by the risk determination system 10A according to the second embodiment will be described. As described above, the degree-of-risk determiner 204A determines the first degree of risk on the basis of a similarity between risk determination information and accompanying information about a current-position image. Processing to determine the first degree of risk can be executed in a shorter time than processing to calculate a similarity between a risky-position image and a current-position image, so the moving-body-mounted device 102 can quickly output attention calling information.

### 2-7. Modifications of the second embodiment

### 2-7-1. First modification

Risky-position images managed by the server device 101A in the risk occurrence information manager 202 do not need to be images themselves obtained by photography. These images may be edited so that the degree-of-risk determiner 204A can easily calculate a degree of similarity with a current-position image. Alternatively, one or more risky-position images edited in this way may be managed as new images, in correspondence to their original risky-position image.

Specifically, a risky-position image may be edited to, for example, a binary image on which image feature values concerning traffic situations are enhanced, traffic situations being related to a situation concerning a place including a road shape, a traffic environment, and the behaviors of one's own vehicle. Alternatively, the binary image may be managed in correspondence to its original risky-position image.

In addition, the image feature values concerning traffic situations may be managed as a plurality of binary images classified into the situation concerning a place including a road shape, the traffic environment, the behaviors of one's own vehicle, and the like, in correspondence to their original risky-position image. In this case, the degree-of-risk determiner 204A preferably calculates a similarity between, for example, the current-position image and the risky-position image edited to a binary image, instead of a similarity between the current-position image and the original risky-position image.

### 2-7-2. Second modification

Accompanying information about risk determination information managed by the server device 101A in the risk determination information manager 206 does not need to be a value itself obtained in advance. Accompanying information may be replaced with a granularity that is significant when the degree-of-risk determiner 204A calculates a degree of similarity with accompanying information about a current-position image (or a granularity that enables a degree of similarity to be easily calculated). Alternatively, accompanying information about the granularity may be newly added.

Specifically, examples of granularities that are significant for a date and time at which a risky event occurred (or granularities that enable a degree of similarity to be easily calculated) include 24 time slots, starting from zero o'clock, at one-hour intervals, am/pm, days and months, days of the week, seasons, holidays, and days indicated by a multiple of five (5, 10, 15, 20, 25, and 30). Examples of granularities that are significant for a date and time at which a risky event occurred (or granularities that enable a degree of similarity to be easily calculated) include rectangular regions with the same size into which map information is divided and road segments with a predetermined distance into which a road is divided. Examples of granularities that are significant for a direction of photography (traveling) (or granularities that enable a degree of similarity to be easily calculated) include four directions (north, south, east, and west), eight directions (north, south, east, west, northeast, southeast, northwest and southwest), and uphill/downhill roads.

Accompanying information about risk determination information managed by the server device 101 A in the risk determination information manager 206 does not need to be limited to a traffic situation at the time of the occurrence of a risky incident. Accompanying information may include various types of attribute information about the moving body 105 that encountered the risky incident. Various types of attribute information are, for example, the weight, displacement, and type of one's own vehicle, which is the moving body 105. Types of one's own vehicle include, for example, sedans, vans, and tracks. The accompanying information only need to have been obtained in advance by any method from, for example, records of accidents or near-accidents that are held by the police, a carrier, or the like, or from accident assessment information or the like held by a nonlife insurance company or the like. Explanation of the method will be omitted here.

### 2-7-3. Third modification

Accompanying information about risk determination information managed by the server device 101 A in the risk determination information manager 206 may include information that explains an accident, a near accident, or another risky incident that occurred in the past. In addition, the first degree-of-risk information created by the server device 101 A in the degree-of-risk determiner 204A may include part or all of the information that explains a risky incident.

An example of the information that explains a risky incident will now be described with reference to Fig. 10. As illustrated in Fig. 10, information that explains a risky incident that occurred on December 1, 2014 at 8:30:00 is, for example, a broadside near-accident. Information that explains a risky incident that occurred on December 5, 2014 at 12:45:00 is, for example, a rear-end near-accident. Information that explains a risky incident that occurred on December 8, 2014 at 12:00:20 is, for example, a right-turn accident with an oncoming vehicle. Information that explains a risky incident that occurred on December 10, 2014 at 14:00:45 is, for example, a near accident with an opposite traverser.

An example of creating the first degree-of-risk information in the above cases will be described. For example, suppose that the server device 101 A receives, at the transmitter/receiver 201, accompanying information about the current-position image with a file name of 98765432.jpg illustrated in Fig. 3B and, on the basis of a similarity with risk determination information about the risky incident that occurred on December 8, 2014 at 12:00:20, determines, in the degree-of-risk determiner 204A, that the first degree of risk is 0.9. In this case, the first degree-of-risk information created in the degree-of-risk determiner 204A is, for example, that the degree of risk in which a right-turn accident with an oncoming vehicle occurs is 0.9.

### 2-7-4. Fourth modification

The server device 101 A does not necessarily perform analysis processing in the image analyzer 203 to analyze a traffic situation and similarity calculation processing in the degree-of-risk determiner 204A to calculate a similarity between a current-position image and a risky-position image individually in succession. If, for example, a machine learning method called deep learning is used, analysis processing and similarity calculation processing may be performed concurrently.

### 2-7-5. Fifth modification

If the second degree of risk determined by the degree-of-risk determiner 204A is within a predetermined range, the server device 101A may accumulate (add) the current-position image that the transmitter/receiver 201 has received in the risk occurrence information manager 202 as a new risky-position image and may manage it in correspondence to the accompanying information about the current-position image. The degree of risk is determined to be within the prescribed range if, for example, the second degree of risk exceeds a preset threshold (for example, 0.5).

### 2-7-6. Sixth modification

If the second degree of risk determined by the degree-of-risk determiner 204A is within a predetermined range, the server device 101A may rewrite the risk determination information referenced by the degree-of-risk determiner 204A to determine the first degree of risk or may delete the risk determination information from the risk determination information manager 206. The degree of risk is determined to be within the prescribed range if, for example, the second degree of risk falls below a preset threshold (for example, 0.5).

### 2-7-7. Seventh modification

The moving-body-mounted device 102 to which the first degree-of-risk information about the first degree of risk determined by the server device 101 A is transmitted does not need to be the moving-body-mounted device 102 from which the current-position image the server device 101 A has received had been transmitted. If, for example, the moving body 105 is a vehicle, first degree-of-risk information about the first degree of risk, at a specific position, which was determined on the basis of the current-position image transmitted from the preceding vehicle, may be transmitted to the moving-body-mounted device 102 mounted in the following vehicle that is determined to pass the specific position after a little delay. Thus, it is possible to call attention to the user (driver) of the following vehicle.

### Other modifications

So far, the risk determination method and the like in one or more aspects have been described according to the above first and second embodiments. However, the present disclosure is not limited to the first and second embodiments. The range of one or more aspects may include embodiments in which various modifications that a person having ordinary skill in the art thinks of are applied to the first and second embodiments and may also include embodiments in which constituent elements in different embodiments or their modifications are combined, without departing from the intended scope of the present disclosure. For example, the first and second embodiments described above may be combined.

Although, in the above embodiments, for example, the moving body 105 has been described as a vehicle, the vehicle may be an automobile, a motorbike, an electric train, a bicycle, or the like. The moving body 105 is not limited to a vehicle; for example, the moving body 105 may be a smartphone, a tablet, or the like.

Part or all of the constituent elements of each device described above may be formed in the form of an IC card or standalone module that is removably attached to each device. The IC card or module is a computer system that includes a microprocessor, a ROM, a RAM, and other components. The IC card or module may include a super LSI chip as described above. When the microprocessor operates as commanded by a computer program, the IC card or module achieves its functions. The IC card or module may be tamper-resistant.

The present disclosure may be the methods described above. Alternatively, the present disclosure may be a computer program that implements these methods by using a computer or may be digital signals constituting the computer program. Alternatively, the present disclosure may be a computer-readable recording medium, such as, for example, a flexible disk, a hard disk, a CD-ROM, a magneto-optical (MO) disk, a digital versatile disc (DVD), a DVD-ROM, a DVD-RAM, a Blu-ray (registered trademark) disc (BD), a semiconductor memory, or the like, on which the computer program or digital signals are recorded. Alternatively, the present disclosure may be the digital signals recorded on any of these recording media. Alternatively, the present disclosure may transmit the computer program or digital signals through a telecommunication line, wireless communication, a wired communication line, a network typified by the Internet, data broadcasting, or the like. Alternatively, the present disclosure may be a computer system including a microprocessor and a memory. The memory may have stored the computer program. The microprocessor may operate as commanded by the computer program. Alternatively, the present disclosure may be practiced by another independent computer system to which the recording medium on which the program or digital signals have been recorded is transferred or to which the program or digital signals are transferred through the network or the like.

The present disclosure is useful for a risk determination method, a risk determination device, a risk determination system, and a risk output device.

## Claims

1. A risk determination method used in a risk determination system that manages a degree of risk at a position at which a moving body is positioned, the risk determination system including a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other, the method comprising:
obtaining moving body information, in which current position information that indicates a current position of the moving body and second sensor information that indicates a situation around the moving body at the current position are included in correspondence to each other; and
determining, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on a basis of a similarity between the second sensor information included in the moving body information and the first sensor information included in the at least one piece of risk occurrence information stored in the risk occurrence information manager.

2. The risk determination method according to Claim 1, wherein in the determining a degree of risk, if the risk occurrence information corresponding to the current position indicated in the current position information included in the moving body information and the risk occurrence information corresponding to a position other than the current position are both stored in the risk occurrence information manager, the degree of risk corresponding to the current position is determined on a basis of a similarity between the second sensor information included in the moving body information and the first sensor information included in the risk occurrence information corresponding to the position other than the current position.

3. The risk determination method according to Claims 1 or 2, wherein:
the risk occurrence information furthers include a seriousness of the risky incident in correspondence to the risky-position information and the first sensor information; and
in the determining a degree of risk, a similarity is determined between the second sensor information included in the moving body information and the first sensor information included in the at least one piece of risk occurrence information stored in the risk occurrence information manager, and the degree of risk at the current position is determined on a basis of the similarity and the seriousness included in correspondence to the first sensor information.

4. The risk determination method according to any of Claims 1 to 3, wherein:
the first senor information is a first image obtained by photographing a situation in which the risky incident occurred at the risky position;
the second sensor information is a second image obtained by photographing a situation around the moving body at the current position; and
in the determining a degree of risk, the degree of risk at the current position is determined on a basis of a similarity between the first image and the second image.

5. The risk determination method according to Claim 4, further comprising analyzing, on a basis of the first image, a first traffic situation at the risky position in case of an occurrence of the risky incident and analyzing, on a basis of the second image, a second traffic situation at the current position; wherein
in the determining a degree of risk, the degree of risk at the current position is determined on a basis of a similarity between the analyzed first traffic situation and the analyzed second traffic situation.

6. The risk determination method according to any of Claims 1 to 5, further comprising:
creating, if the determined degree of risk at the current position is within a predetermined range, the risk occurrence information, in which the current position information included in the moving body information is taken as the risky-position information and the second sensor information included in the moving body information is taken as the first sensor information; and
adding the created the risk occurrence information to the risk occurrence information manager.

7. The risk determination method according to any of Claims 1 to 6, wherein:
in the obtaining moving body information, the moving body information transmitted from a moving-body-mounted device mounted in the moving body is received through a network; and
the risk determination method further comprises transmitting, if the determined degree of risk at the current position is within a predetermined range, degree-of-risk information about the degree of risk to the moving-body-mounted device that has transmitted the moving body information.

8. The risk determination method according to any of claims Claim 1 to 6, wherein:
in the obtaining moving body information, the moving body information transmitted from a moving-body-mounted device mounted in the moving body is received through a network; and
the risk determination method further comprises transmitting, if the determined degree of risk at the current position is within a predetermined range and another moving body is decided to pass the current position indicated in the current position information included in the moving body information within a predetermined time after the moving body information has been received, degree-of-risk information about the degree of risk to a moving-body-mounted device mounted in the another moving body.

9. The risk determination method according to any of claims Claim 1 to 8, further comprising storing risk determination information, in which the current position information and the determined degree of risk at the current position are associated with each other, in a risk determination information manager, wherein
in the determining a degree of risk, if the risk determination information corresponding to the current position indicated in the current position information included in the moving body information is stored in the risk determination information manager, the degree of risk included in the risk determination information is used.

10. The risk determination method according to any of Claims 1 to 9, wherein:
the moving body information further includes third sensor information, which indicates a traveling situation of the moving body, in correspondence to the current position information and the second sensor information; and
in the determining a degree of risk, a similarity is obtained between the second sensor information included in the moving body information and the first sensor information included in at least one piece of risk occurrence information stored in the risk determination information manager, and the degree of risk at the current position is determined on a basis of the similarity and the third sensor information.

11. The risk determination method according to Claim 1, wherein the risk determination system further includes a risk determination device including a processor, and any one of the obtaining the moving body information and the determining the degree of risk is executed by the processor.

12. A risk determination device that manages a degree of risk at a position at which a moving body is positioned, the device comprising:
a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other;
a receiver that receives moving body information, in which current position information that indicates a current position of the moving body and second sensor information that indicates a situation around the moving body at the current position are included in correspondence to each other; and
a determiner that determines, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on a basis of a similarity between the second sensor information included in the moving body information and the first sensor information included in the at least one piece of risk occurrence information stored in the risk occurrence information manager.

13. A risk determination system equipped with a risk determination device and a risk output device mounted in a moving body, the system managing a risk at a position at which the moving body is positioned, wherein: the risk determination device includes
a risk occurrence information manager that stores at least one piece of risk occurrence information, in which risky-position information that indicates a risky position at which a risky incident occurred and first sensor information that indicates a situation in which the risky incident occurred at the risky position are included in correspondence to each other,
a first receiver that receives moving body information, in which current position information that indicates a current position of the moving body and second sensor information that indicates a situation around the moving body at the current position are included in correspondence to each other,
a determiner that determines, if the risk occurrence information corresponding to the current position indicated in the current position information included in the moving body information is not stored in the risk occurrence information manager and the risk occurrence information corresponding to a position other than the current position is stored in the risk occurrence information manager, a degree of risk at the current position on a basis of a similarity between the second sensor information included in the moving body information and the first sensor information included in the at least one piece of risk occurrence information stored in the risk occurrence information manager, and
a first transmitter that transmits degree-of-risk information about the degree of risk to the risk output device; and
the risk output device includes
a second transmitter that transmits the moving body information to the risk determination device,
a second receiver that receives the degree-of-risk information transmitted from the risk determination device, and
an outputer that outputs, on a basis of the received degree-of-risk information, attention calling information to call attention to a user of the moving body.

14. A risk output device used in the risk determination system according to Claim 13, the device comprising:
a second transmitter that transmits, to a risk determination device, moving body information, in which current position information that indicates a current position of a moving body and second sensor information that indicates a situation around the moving body at the current position are included in correspondence to each other; and
a second receiver that receives degree-of-risk information transmitted from the risk determination device; and
an outputer that outputs, on a basis of the received degree-of-risk information, attention calling information to call attention to a user of the moving body.
